# EUROPÄISCHE PATENTANMELDUNG

(11) **EP 4 844 172 A1**
(43) Veröffentlichungstag der Anmeldung: **25.11.2026**
(21) Anmeldenummer: 25178536.6
(22) Anmeldetag: 23.05.2025
(51) Int. Cl.: E05F 3/12, F16K 1/38

(54) **REGULIERVENTIL FÜR EINEN TÜRSCHLIESSER**

(71) Anmelder: dormakaba Deutschland GmbH, 58256 Ennepetal (DE)
(72) Erfinder: PABST, Thomas, 58256 Ennepetal (DE); BRUNS, Marcus, 58256 Ennepetal (DE)
(74) Vertreter: Balder IP Law, S.L.

(57) **Zusammenfassung**

Die Anmeldung betrifft ein Regulierventil (1) für einen Türschließer (100) zum Öffnen und/oder Schließen einer Tür mit einem Ventilgehäuse (23), einem das Ventilgehäuse (23) durchstoßenden, sich verjüngenden Ventilkanal (25) mit einem weiten Ende (26) und einem enges Ende (27), einem im Wesentlichen radial in den Ventilkanal (25) mündenden Zuflusskanal (28), einem im Wesentlichen radial in den Ventilkanal (25) mündenden Abflusskanal (29), einer im Ventilkanal (25) angeordneten und eine sich im Wesentlichen axial verjüngende Form aufweisenden Ventilbaugruppe (2) mit einem Ventilstift (3) und einer Ventilbuchse (9), welche eine den Ventilstift (3) teilweise aufnehmende Aufnahmekavität (10) aufweist.

## Beschreibung

Die Anmeldung betrifft ein Regulierventil für einen Türschließer zum Öffnen und/oder Schließen einer Tür. Weitere Gegenstände der Erfindung sind ein Türschließer zum Öffnen und/oder Schließen einer Tür mit einem solchen Regulierventil und ein Verfahren zur Herstellung des Regulierventils.

Die vorliegende Erfindung betrifft das Gebiet der Türschließtechnik und insbesondere Regulierventile für Türschließer, die zum Öffnen und Schließen von Türen verwendet werden. Türschließer sind Vorrichtungen, die Türen automatisch schließen, nachdem sie geöffnet wurden, aber auch die Öffnungsbewegung der Türen beeinflussen und regulieren können. Sie werden häufig in öffentlichen Gebäuden, Wohnhäusern und gewerblichen Einrichtungen eingesetzt, um Sicherheit und Komfort zu gewährleisten.

Türschließer umfassen typischerweise ein Gehäuse, einen hydromechanischen Schließmechanismus und mindestens ein Regulierventil. Das Regulierventil steuert den Fluidfluss innerhalb des Türschließers, wodurch einer der Betriebsparameter des Türschließers beeinflusst und eingestellt werden kann, wie z. B. die Öffnungsgeschwindigkeit der Tür, die Schließgeschwindigkeit der Tür oder die Öffnungsdämpfung. Dies ermöglicht ein Einstellen des Betriebsparameters des Türschließers insbesondere im montierten Zustand, so dass dieser vor Ort an die jeweiligen Ansprüche an den Türschließer am Montageort angepasst werden kann. Sollen mehrere Betriebsparameter des Türschließers eingestellt werden können, so kommen entsprechend viele Regulierventile im Türschließer zum Einsatz.

Ein solches Regulierventil weist ein Ventilgehäuse, bei welchem es sich um das Gehäuse des Türschließers handeln kann, mit einen Ventilkanal auf, durch den das Fluid teilweise fließt. Ein im Wesentlichen radial in den Ventilkanal mündender Zuflusskanal ermöglicht den Eintritt des Fluids in den Ventilkanal, während ein im Wesentlichen radial in den Ventilkanal mündender Abflusskanal den Austritt des Fluids aus dem Ventilkanal ermöglicht.

In diesen Ventilkanal wird zumeist eine mehrelementige Ventilbaugruppe eingebracht, mit welcher der Fluidfluss vom Zuflusskanal über den Ventilkanal zum Abflusskanal geregelt werden kann. Durch eine axiale Verstellung des einen Elements der Ventilbaugruppe gegen ein anderes Element der Ventilbaugruppe kann der Fluidfluss erhöht, verringert oder ganz vermieden werden, um den mit diesem Fluidfluss verbundenen Betriebsparameter des Türschließers einzustellen.

Bislang erfolgt die Montage der einzelnen Elemente der Ventilbaugruppe von beiden Seiten des Ventilkanals, was aufwendig ist. Zudem muss zur Ermöglichung der Regulierung und damit zur Einstellung des Regulierventils das eine Element der Baugruppe gegen das andere Element verdreht werden. Dies macht eine aufwendige Ausgestaltung der Elemente erforderlich, so dass sich diese in axialer Richtung bewegen können, aber zugleich im Ventilkanal gehalten werden und selbst in extremen Einstellpositionen nicht aus diesem herausfallen. Dabei muss auch der Ventilkanal kompliziert geformt werden, was insbesondere eine Bearbeitung des Gehäuses entlang beider axialer Richtungen des Kanals erforderlich macht. Sowohl die Fertigung als auch die Montage ist bei den bekannten Regulierventilen daher kompliziert, mit vielen Arbeitsschritten verbunden und entsprechend zeit- und arbeitsaufwändig.

Die Aufgabe der vorliegenden Erfindung liegt daher darin, ein Regulierventil und einen Türschließer anzugeben, welche fertigungstechnisch einfacher herzustellen und einfacher zu montieren sind.

Diese Aufgabe wird bei einer Vorrichtung der eingangs genannten Art dadurch gelöst, dass das Regulierventil ein Ventilgehäuse, einen das Ventilgehäuse durchstoßenden, sich verjüngenden Ventilkanal mit einem weiten Ende und einem engen Ende, einen im Wesentlichen radial in den Ventilkanal mündenden Zuflusskanal, einen im Wesentlichen radial in den Ventilkanal mündenden Abflusskanal und eine im Ventilkanal angeordnete und eine sich im Wesentlichen axial verjüngende Form aufweisende Ventilbaugruppe aufweist, wobei die Ventilbaugruppe einen Ventilstift und eine Ventilbuchse aufweist und die Ventilbuchse eine den Ventilstift teilweise aufnehmende Aufnahmekavität aufweist.

Das Regulierventil weist als für die Einstellung in erster Linie relevante Elemente den Ventilstift und die Ventilbuchse auf. Durch eine Betätigung des Ventilstifts und/oder der Ventilbuchse kann dabei eine Einstellung des Regulierventils erfolgen, insbesondere durch eine Veränderung der Lage oder Position des Ventilstifts innerhalb der Aufnahmekavität der Ventilbuchse, so dass der Fluidfluss vom Zuflusskanal zum Abflusskanal geregelt werden kann. Dabei münden der Zuflusskanal und der Abflusskanal im Wesentlichen radial in den Ventilkanal, wobei ein im Wesentlichen radial in den Ventilkanal mündender Kanal ein solcher Kanal ist, der im Umfangsbereich um die Längsachse des Ventilkanals und nicht entlang der Längsachse in den Ventilkanal mündet. Dies ermöglicht ein radiales Anströmen der Ventilbaugruppe und ein radiales Abströmen des Fluids von der Ventilbaugruppe.

Der Ventilkanal durchstößt das Ventilgehäuse, d.h. seine beiden diametralen Enden sind nach ventilgehäuseaußen offen. Auf diese Weise wird ermöglicht, dass das Regulierventil von beiden Seiten aus zugänglich und insbesondere einstellbar ist. Eine von der Montageposition des Türschließers unabhängige Einstellmöglichkeit des Regulierventils kann auf diese Weise ermöglicht werden. Dies kann insbesondere für aufliegende Türschließer von Vorteil sein, bei denen je nach Montageposition und Türanschlag nur eine der von dem Ventilkanal durchstoßenen Seitenflächen des Gehäuses zugänglich sein kann, während die andere z. B. an dem Türflügel oder Türrahmen oder Türsturz anliegt.

Durch seine sich verjüngende Ausgestaltung weist der Ventilkanal zwei das Ventilgehäuse durchstoßende Enden auf, wobei die lichte Höhe des weiten Endes größer als die lichte Höhe des engen Endes ist. Dies bedeutet insbesondere, dass sich der Ventilkanal nach einer Verjüngung nicht erneut aufweitet. Auf diese Weise kann ein fertigungstechnisch einfacher herzustellendes und einfacher montierbares Regulierventil erzielt werden, da die Fertigung des sich verjüngenden Ventilkanals und die Montage der Ventilbaugruppe in diesem einzig über die Seite des Ventilgehäuses mit dem weiten Ende erfolgen kann.

Auch die Ventilbaugruppe kann eine sich im Wesentlichen axial verjüngende Form aufweisen, bei der zur Ermöglichung der Funktion erforderliche radiale Rückschritte und/oder Ausnehmungen vorhanden sein können. Die Ventilbaugruppe kann entsprechend entlang der Längsachse einen radial größeren Endbereich und einen im Vergleich zu diesem radial kleineren Endbereich aufweisen.

Es ist möglich, dass sich der Ventilkanal stufenweise verjüngt. Durch eine stufenweise Verjüngung kann der Ventilkanal entlang der Längsachse in mehrere Sektionen unterteilt sein, die einen im Wesentlichen gleichbleibenden lichten Durchmesser aufweisen. Vorzugsweise weist der Ventilkanal mindestens drei, bevorzugt mindestens vier, insbesondere bevorzugt mindestens fünf, Sektionen auf. **In** den Übergängen zwischen benachbarten Sektionen kann der Ventilkanal, insbesondere lineare, Verjüngungen aufweisen.

**In** vorteilhafter Weise verjüngt sich die Ventilbaugruppe in gleicher Weise stufenweise wie der Ventilkanal. Insbesondere kann die Ventilbaugruppe ebenso viele Sektionen mit im Wesentlichen gleichbleibendem Durchmessern aufweisen wie der Ventilkanal.

In Weiterbildung der Erfindung kann vorgesehen sein, dass der Ventilkanal am engen Ende in eine nach ventilgehäuseaußen offene Betätigungsaufweitung des Ventilgehäuses mündet. Dies verbessert die Zugänglichkeit zur Betätigung der Ventilbaugruppe im Bereich des engen Endes. In die Betätigungsaufweitung kann ein Betätigungsbereich der Ventilbaugruppe, insbesondere der Betätigungsbereich der Ventilbuchse, hineinragen. Die Betätigungsaufweitung kann einen Zugang von ventilgehäuseaußen zu dem aus dem Ventilkanal hinausragenden Betätigungsbereich ermöglichen.

Es ist möglich, dass der Betätigungsbereich eine Betätigungsstelle aufweist, über welche die Ventilbaugruppe von ventilgehäuseaußen mit einem Werkzeug betätigt, insbesondere in Rotation versetzt, werden kann. Die Betätigungsstelle kann insbesondere in Form eines Innensechskants zur Betätigung mit einem Inbusschlüssel, eines Außensechskants zur Betätigung mit einem Schrauben- oder Steckschlüssel, eines Kreuzschlitzes zur Betätigung mit einem Kreuzschlitzschraubendreher und/oder eines Schlitzes zur Betätigung mit einem Schlitzschraubendreher ausgestaltet sein. Insbesondere ein Schlitz hat sich als vorteilhaft erwiesen, da dieser auch bei kleinen Bauformen eine zuverlässige Kraftübertragung ohne Beschädigung der Betätigungsstelle durch die wirkenden Kräfte ermöglicht.

Vorzugsweise weisen der Ventilstift und die Ventilbuchse jeweils einen Betätigungsbereich auf, welche entlang der Längsachse diametral gegenüberliegende Enden der Ventilbaugruppe bilden.

Bevorzugt ist, dass der Ventilstift in dem Ventilgehäuse relativ zur Ventilbuchse axial beweglich gelagert ist. Dies ermöglicht eine präzise Regelung des Fluidflusses durch eine axiale Bewegung des Ventilstift, insbesondere gegenüber der Ventilbuchse. Zudem kann der Ventilstift zugleich drehbeweglich gelagert sein, wobei die Rotationsbewegung mit der axialen Bewegung gekoppelt sein kann, insbesondere über eine Gewindeverbindung zwischen dem Ventilstift und dem Ventilkanal.

Eine weitere Ausgestaltung sieht vor, dass der Ventilstift einen sich konisch entlang der Längsachse verjüngenden Regulierungsbereich aufweist. Dies erhöht die Genauigkeit der Fluidregelung. Der konische Regulierungsbereich kann die Effizienz des Ventils durch präzise Steuerung des Fluidflusses verbessern. Der Regulierungsbereich kann insbesondere das diametral zum Betätigungsbereich des Ventilstift liegende Ende des Ventilstifts bilden.

In einer weiteren Ausführungsform der Erfindung kann die Ventilbuchse entlang der Längsachse des Ventilkanals axial festgelegt sein. Dies kann axiale Bewegungen verhindern, die die Funktionalität des Regulierventils beeinträchtigen könnten. Die Ventilbuchse kann in beide axiale Richtungen entlang der Längsachse des Ventilkanals axial festgelegt sein. Auf diese Weise kann verhindert werden, dass die Ventilbuchse ihre Position relativ zum Zuflusskanal und zum Ausflusskanal axial verändert. Gleichwohl kann die Ventilbuchse derart gelagert sein, dass sie weiterhin um die Längsachse gedreht werden kann, um ihre Lage relativ zum Zuflusskanal und Abflusskanal zu verändern.

In diesem Zusammenhang kann die Ventilbaugruppe einen Pressring zur axialen Festlegung der Position der Ventilbuchse im Ventilkanal aufweisen. Der Pressring kann eine feste und stabile Montage der Ventilbuchse gewährleisten. Dabei kann der Pressring eine axiale Festlegung der Position der Ventilbuchse im Ventilkanal per Presspassung ermöglichen. Insbesondere kann der Pressring den Ventilstift radial außenliegend umfänglich umgeben.

Zudem kann der Pressring derart axial zwischen dem Ventilstift und der Ventilbuchse angeordnet sein, dass ein Teil, insbesondere ein Kopplungsbereich und/oder der Regulierungsbereich, des Ventilstifts durch den Pressring hindurch in die Ventilbuchse ragt.

Ferner kann es vorteilhaft sein, wenn die Ventilbuchse einen radial verlaufenden Fluideinlass und einen radial verlaufenden Fluidauslass aufweist. Dies ermöglicht einen gleichmäßigen Fluidfluss durch die Ventilbuchse. Das zu regulierende Fluid kann auf diese Weise radial in die Aufnahmekavität eintreten und austreten. Insbesondere kann das zu regulierende Fluid über den Fluideinlass radial nach innen in die Aufnahmekavität eintreten, dort axial entlang der Längsachse einen Ventilsitzbereich durchqueren und über den Fluidauslass radial nach außen aus der Aufnahmekavität austreten.

Des Weiteren kann die Ventilbuchse ein radial an ihrer Außenseite angeordnetes und gegen die Innenwand des Ventilkanals abdichtendes Dichtelement zwischen dem Fluideinlass und dem Fluidauslass aufweisen. Durch diese Anordnung des Dichtelements kann verhindert werden, dass das Fluid ungeregelt an der Ventilbuchse vorbeifließt. Ein Fluidfluss an dem eine Barriere bildenden Dichtelement vorbei kann auf diese Weise nur über den Fluideinlass und den Fluidauslass durch die Ventilbuchse hindurch erfolgen.

Es ist möglich, dass die Ventilbaugruppe mindestens drei Dichtelemente aufweist, die den Ventilkanal axial in einen Anströmbereich mit dem Fluideinlass der Ventilbuchse und dem Zuflusskanal sowie einen getrennten Abströmbereich mit dem Fluidauslass der Ventilbuchse und dem Abflusskanal unterteilen. Dies verhindert das Eindringen von Fluid in unerwünschte Bereiche. Anströmbereich und Abströmbereich können nur über den Ventilsitz strömungsverbunden sein. Zudem kann verhindert werden, dass das Fluid über die Enden des Ventilkanals direkt nach ventilgehäuseaußen dringt.

Die Dichtelemente können an der Außenseite der Ventilbaugruppe angeordnet sein.

Die Ventilbuchse kann zwei auf ihrer Außenseite angeordnete, umfänglich verlaufende Umströmungsnuten aufweisen, in denen das Fluid die Ventilbuchse umfänglich umströmen kann. Der Fluideinlass und Fluidauslass kann jeweils eine der Umströmungsnuten mit der Aufnahmekavität verbinden. Dies ermöglicht einen Fluidfluss zwischen dem Zuflusskanal und dem Fluideinlass sowie dem Fluidauslass und dem Abflusskanal unabhängig von der rotatorischen Ausrichtung der Ventilbuchse im Ventilkanal. Auf diese Weise müssen der Fluideinlass und der Fluidauslass nicht fluchtend mit dem Zuflusskanal bzw. dem Abflusskanal ausgerichtet sein, um einen Fluidaustausch zwischen diesen zu ermöglichen. Denn das Fluid kann die Ventilbuchse in der jeweiligen Umströmungsnut umströmen, um vom Zuflusskanal zum Fluideinlass sowie vom Fluidauslass zum Abflusskanal zu gelangen. Daher kann die Ventilbuchse um die Längsachse relativ zum Ventilkanal gedreht werden, ohne die Wirksamkeit des Regulierventils einzuschränken.

Gemäß einem Ausführungsbeispiel der Erfindung kann der Ventilstift und/oder die Ventilbuchse mindestens eine Ausnehmung zur koaxialen Aufnahme eines Dichtelements aufweisen. Dies ermöglicht die Integration von Dichtelementen zur Vermeidung von Leckagen. Die Ausnehmung kann in Form einer Radialnut gestaltet sein. Bei dem Dichtelement kann es sich insbesondere um einen Dichtring handeln.

In diesem Zusammenhang ist es möglich, dass der Ventilstift eine Ausnehmung und die Ventilbuchse zwei axial beabstandete Ausnehmungen aufweist.

Vorzugsweise ist es, wenn die Ventilbuchse einen den Regulierungsbereich des Ventilstifts aufnehmenden Ventilsitzbereich aufweist, welcher durch den Regulierungsbereich verschließbar ist. Der Ventilsitzbereich und der Regulierungsbereich können eine präzise Regelung des Fluidflusses durch die Ventilbaugruppe ermöglichen. Der Ventilsitzbereich kann vollständig durch den Regulierungsbereich verschlossen werden, um sämtlichen Fluidfluss zu unterbrechen, oder nur teilweise verschlossen werden, so dass der für einen Durchfluss des Fluids durch den Ventilsitzbereich freie Querschnitt des Ventilsitzbereichs reduziert wird, um den Fluidfluss zu reduzieren.

Der Ventilsitzbereich ist vorzugsweise zwischen dem Fluideinlass und dem Fluidauslass angeordnet.

Gemäß einer konstruktiven Ausgestaltung wird vorgeschlagen, dass der Ventilstift und die Ventilbuchse zusammenwirkende Kopplungsbereiche zur formschlüssigen Kopplung der Rotationsbewegungen des Ventilstifts und der Ventilbuchse aufweisen. Dies kann eine synchronisierte Bewegung, insbesondere eine synchronisierte Rotationsbewegung, des Ventilstifts und der Ventilbuchse sicherstellen. Der Kopplungsbereich des Ventilstifts kann vom Kopplungsbereich der Ventilbuchse umfänglich umschlossen sein.

Die formschlüssige Kopplung kann in Umfangsrichtung derart ausgestaltet sein, dass eine Rotationsbewegung der Ventilbuchse um die Längsachse auf den Ventilstift und eine Rotationsbewegung des Ventilstifts um die Längsachse auf die Ventilbuchse übertragen werden kann.

Zugleich kann die formschlüssige Kopplung derart ausgestaltet sein, dass der Ventilstift im Kopplungsbereich gegenüber der Ventilbuchse in axialer Richtung entlang der Längsachse gleiten kann. Auf diese Weise können Rotationsbewegungen zwischen dem Ventilsitz und der Ventilbuchse übertragen werden, währen sich der Ventilstift in axialer Richtung gegenüber der Ventilbuchse bewegen kann.

Ferner kann der Kopplungsbereich des Ventilstifts facettiert sein und Kontaktfacetten aufweisen, welche mit Gegenflächen des Kopplungsbereichs der Ventilbuchse im radialen Formschluss anliegen. Dies ermöglicht die Übertragung einer Rotationsbewegung zwischen dem Ventilstift und der Ventilbuchse. Dabei können die Kontaktfacetten und Gegenflächen insbesondere in radialen Formschluss und umfänglichen Kraftschluss stehen. Eine Betätigung der Ventilbaugruppe über den Betätigungsbereich der Ventilbuchse kann auf diese Weise eine Rotation des Ventilstifts bewirken, so dass dieser zur Regelung des Durchflusses axial bewegt wird.

Die Kontaktfacetten können plan ausgestaltet sein. Auf diese Weise können sie insbesondere plan an den Gegenflächen des Kopplungsbereichs der Ventilbuchse anliegen. Vorzugsweise sind die jeweiligen Kontaktfacetten jeweils von einem axialverlaufenden Radiusbereich begrenzt. Der Radiusbereich kann den umfänglichen Übergang zwischen zwei benachbarten Kontaktfacetten bilden. Der Radiusbereich kann nachträglich ausgearbeitet werden oder herstellungsbedingt vorhanden sein.

Zudem kann der Kopplungsbereich des Ventilstifts Freifacetten aufweisen, die im montierten Zustand nicht an der Ventilbuchse anliegen. Auf diese Weise kann eine geringere Kontaktfläche zwischen den Kopplungsbereichen der Ventilbuchse und des Ventilstifts erzielt werden, so dass die axiale Haftreibung verringert und ein axiales Verschieben des Ventilstifts gegenüber der Ventilbuchse ermöglicht wird.

Im Bereich der Freifacette kann der Kontaktbereich der Ventilbuchse Aussparungen aufweisen. Auf diese Weise kann ein Kontakt der Ventilbuchse mit den Freifacetten effektiv vermieden werden. Die Aussparungen können sich insbesondere radial nach außen erstrecken.

Es wird vorgeschlagen, dass der Ventilkanal, insbesondere einzig, am weiten Ende ein Gewinde aufweist. Dies ermöglicht eine durch Rotationsbewegung verursachte axiale Bewegung des Ventilstifts im Ventilkanal. Das Gewinde kann insbesondere ein Innengewinde sein. Indem der Ventilkanal einzig ein Gewinde, d. h. keine weiteren Gewinde, aufweist, kann der Ventilkanal auf herstellungstechnisch besonders einfache Weise gefertigt werden, da keine weiteren Gewinde in diesen eingebracht werden müssen.

Vorzugsweise weist der Ventilstift ein zum Gewinde des Ventilkanals korrespondierendes Gewinde, insbesondere ein Außengewinde, auf. Mit diesem Gewinde kann der Ventilstift in das Gewinde des Ventilkanals eingreifen und so durch Rotation in axialer Richtung entlang der Längsachse verschoben werden.

Das Gewinde des Ventilstifts kann am diametral zum Regulierungsbereich liegenden Endbereich des Ventilstifts angeordnet sein.

In einer vorteilhaften Ausgestaltung kann der Ventilkanal im Bereich eines engeren Endes einen Anschlag für die Ventilbuchse aufweisen. Dies kann sicherstellen, dass die Ventilbuchse in einer Richtung in der korrekten axialen Position verbleibt. Der Anschlag kann Teil einer letzten Verjüngungsstufe des sich stufenweise verjüngenden Ventilkanals sein.

**In** diesem Zusammenhang hat es sich als vorteilhaft erwiesen, wenn die Ventilbuchse einen, insbesondere umfänglichen, Gegenanschlag aufweist, mit welchem die Ventilbuchse an dem Anschlag des Ventilkanals anliegen kann.

Bei einem Türschließer der eingangs genannten Art wird zur Lösung der vorstehenden Aufgabe vorgeschlagen, dass das Regulierventil in der zuvor beschriebenen Weise ausgebildet ist, wodurch sich die im Zusammenhang mit der Vorrichtung beschriebenen Vorteile ergeben.

Dabei ist es möglich, dass das Ventilgehäuse ein Teil des Gehäuses des Türschließers ist. Auf diese Weise kann das Ventilgehäuse einstückig mit dem Gehäuse des Türschließers ausgestaltet sein.

Bei einem Verfahren zur Herstellung eines, insbesondere in der zuvor beschriebenen Weise ausgebildeten, Regulierventils, insbesondere eines in der zuvor beschriebenen Weise ausgebildeten Türschließers wird zur Lösung der vorstehend genannten Aufgabe vorgeschlagen, dass es die Schritte des Einbringens der Ventilbaugruppe mit dem in der Ventilbuchse angeordneten Ventilstift, insbesondere zusammen mit einem den Ventilstift radial und umfänglich umgebenden Pressring, als eine Einheit von dem weiten Ende des Ventilkanals aus in den Ventilkanal; des Eindrehens des Gewindes des Ventilstifts in ein Gewinde des Ventilkanals, insbesondere bis ein Regulierungsbereich des Ventilstifts an einem Ventilsitzbereich der Ventilbuchse anliegt, d. h. der Ventilkanal verschlossen wird, oder die Ventilbuchse an einem Anschlag des Ventilkanals anliegt; und des Sicherns der Ventilbaugruppe gegen ein Austreten, insbesondere des Ventilstifts, aus dem Ventilkanalumfasst.

Auf diese Weise kann die Montage der gesamten Ventilbaugruppe in dem Ventilgehäuse en bloc, d. h. zeitglich als eine Einheit, erfolgen und auf einfache Weise gegen ein Herauslösen gesichert werden. Dadurch lässt sich der Montageaufwand erheblich reduzieren. Dabei ist der Ventilstift schon beim Einbringen in der Ventilbuchse angeordnet.

Das Sichern der Ventilbaugruppe gegen ein Austreten aus dem Ventilkanal kann insbesondere am weiten Ende des Ventilkanals erfolgen. Die sich im Wesentlichen axial verjüngende Ventilbaugruppe kann bereits bauartbedingt gegen ein Austreten am engen Ende des Ventilkanals gesichert sein.

Vorzugsweise umfasst der Schritt des Sicherns der Ventilbaugruppe ein Verstemmen des Ventilgehäuses, so dass eine Verformung des weiten Endes eintritt, ein Verstemmen des äußersten Gewindeganges des Gewindes des Ventilkanals, ein Anbringen eines Sicherungsringes und/oder ein Anbringen einer Sicherungsplatte, um ein Austreten der Ventilbaugruppe und insbesondere ein Austreten des Ventilstifts aus dem Ventilkanal zu verhindern.

Das Verstemmen kann ein Umformen durch äußere, insbesondere axiale, Krafteinwirkung sein, so dass das Ventilgehäuse des Ventilkanals oder der äußerste, d.h. in Richtung des weiten Endes des Ventilkanals liegende, Gewindegang des Gewindes derart umgeformt wird, dass die Ventilbaugruppe, insbesondere der Ventilstift, diesen umgeformten Bereich nicht mehr passieren kann und so an einem Ausdrehen oder Entnehmen aus dem Ventilkanal gehindert wird.

Die in Zusammenhang mit dem erfindungsgemäßen Regulierventil und dem erfindungsgemäßen Türschließer beschriebenen Merkmale können einzeln oder in Kombination auch bei dem Verfahren zur Anwendung kommen. Es ergeben sich die gleichen Vorteile, welche bereits beschrieben wurden.

Im Folgenden werden Ausführungsformen, Weiterbildungen und Beispiele der Erfindung anhand der beigefügten Zeichnungen näher erläutert. Die Figuren zeigen:
- Fig. 1: eine perspektivische Ansicht eines erfindungsgemäßen Türschließers,
- Fig. 2: einen Längsschnitt durch ein erfindungsgemäßes Regulierventil,
- Fig. 3: einen Längsschnitt des Ventilkanals des Regulierventils gemäß Fig. 2,
- Fig. 4: eine perspektivische Ansicht einer erfindungsgemäßen Ventilbaugruppe,
- Fig. 5: eine perspektivische Ansicht eines Ventilstifts der Ventilbaugruppe gemäß Fig. 4 und
- Fig. 6: eine perspektivische Ansicht einer Ventilbuchse der Ventilbaugruppe gemäß Fig. 4.

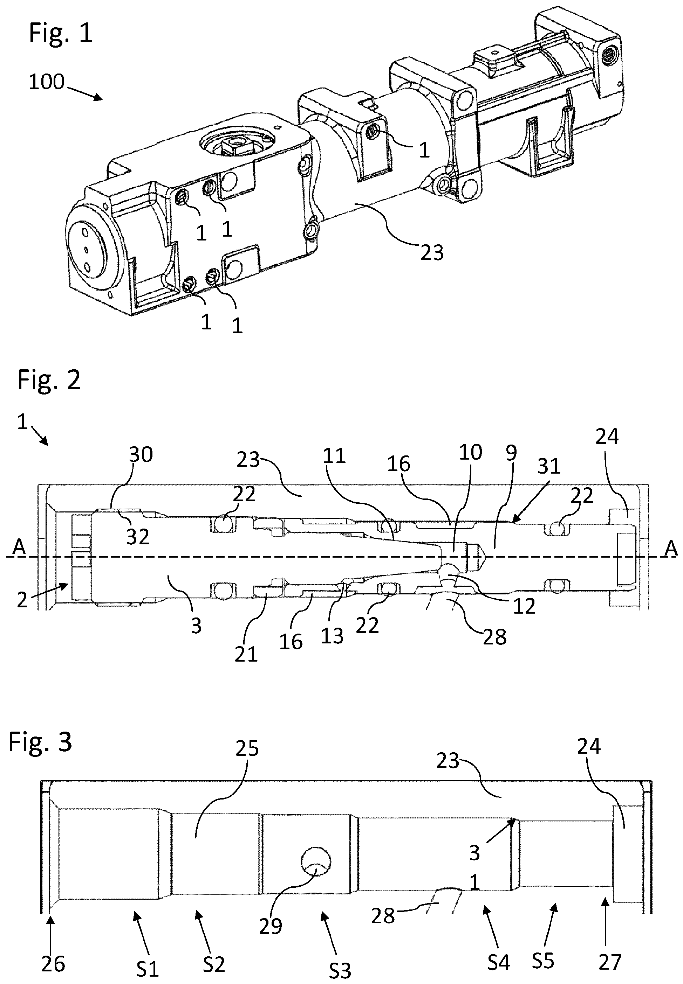

Figur 1 zeigt eine perspektivische Ansicht eines erfindungsgemäßen Türschließers 100. Der Türschließer 100 umfasst ein Türschließergehäuse, das mehrere Regulierventile 1 beinhaltet, wobei das Türschließergehäuse zugleich ein gemeinschaftliches Ventilgehäuse 23 der Regulierventile 1 darstellt. Diese Regulierventile 1 sind an verschiedenen Stellen des Türschließergehäuses angeordnet und ermöglichen die Steuerung und Regulierung des Türschließmechanismus. Das Türschließergehäuse ist länglich und weist mehrere Befestigungselemente auf, die zur Montage des Türschließers 100 an einer Tür oder einem Türrahmen verwendet werden können.

Die Regulierventile 1 sind so positioniert, dass sie leicht zugänglich sind und eine einfache Einstellung ermöglichen. Jedes Regulierventil 1 umfasst einen in das Ventilgehäuse 23 eingebrachten Ventilkanal 25 und eine Ventilbaugruppe 2, die in das Ventilgehäuse 23 hindurchragt. Die Ventilbaugruppe 2 ist so gestaltet, dass sie durch Drehen oder Verschieben die Fluidströmung im Türschließer 100 beeinflussen kann. Sie ermöglicht eine präzise Steuerung des Öffnungs- und Schließverhaltens der Tür.

Das Türschließergehäuse selbst ist robust und widerstandsfähig, um den mechanischen Belastungen standzuhalten, die beim Öffnen und Schließen der Tür auftreten. Es umfasst mehrere Öffnungen und Kanäle, durch die das Fluid strömen kann. Diese Kanäle sind strategisch so angeordnet, dass sie den Fluidfluss effizient steuern und dabei die gewünschten Betriebsparameter des Türschließers 100 entsprechen beeinflussen.

Das Türschließergehäuse weist Betätigungsaufweitungen 24 auf, die den Zugang zu den Ventilbaugruppen 2 erleichtern. Diese Aufweitungen ermöglichen es, die Regulierventile 1 von außen zu betätigen, ohne den Türschließer 100 demontieren zu müssen. Dies ist besonders vorteilhaft, wenn der Türschließer 100 an schwer zugänglichen Stellen montiert ist.

Zudem wird, da der Ventilkanal 25 das Ventilgehäuse 23 und somit das Türschließergehäuse durchstößt, eine Betätigung der Regulierventile 1 über gegenüberliegende Längsflächen des Türschließers 100 ermöglicht, so dass die Regulierventile 1 unabhängig davon eingestellt werden können, ob der Türschließer mit der einen oder der anderen Längsseite an einer Tür oder einem Türrahmen anliegt. Auf diese Weise wären die Regulierventile 1 beispielsweise von der in Fig. 1 gezeigten Längsfläche betätigbar, an welcher die Regulierventile 1 zu erkennen sind, während die in Fig. 1 vom Betrachter abgewandte und nicht erkennbare Längsfläche im montierten Zustand montagepositionsbedingt nicht zugänglich sein kann.

Die Regulierventile 1 sind so konzipiert, dass sie durch Rotation eines Ventilstifts 3 oder eine Ventilbuchse 9 der Ventilbaugruppe 2 eine Veränderung des Fluiddrucks und des Fluidflusses innerhalb der Kanäle des Türschließers 100 bewirken können. Dies führt zu einer präzisen Einstellung der Türbewegung, wodurch die Tür sicher und kontrolliert geschlossen werden kann.

Figuren 2 und 3 zeigen jeweils einen Längsschnitt durch ein erfindungsgemäßes Regulierventil 1, wobei Figur 2 die Ventilbaugruppe 2 beinhaltet und Figur 3 den Ventilkanal 25 ohne die Ventilbaugruppe darstellt. Diese Figuren illustrieren die detaillierte Struktur und Anordnung der einzelnen Elemente des Regulierventils 1 sowie dessen Funktionalität.

In Figur 2 wird das Regulierventil 1 in einem vollständigen Längsschnitt dargestellt, der das Ventilgehäuse 23, den Ventilkanal 25, den Ventilstift 3 und die Ventilbuchse 9 zeigt. Der Ventilkanal 25 verläuft entlang der Längsachse A des Ventilgehäuses 23 und weist ein weites Ende 26 sowie ein enges Ende 27 auf.

Der Ventilkanal 25 verjüngt sich von dem weiten Ende 26 zu dem engen Ende 27 hin und dient der Aufnahme der Ventilbaugruppe 2. An seinem engen Ende 27 mündet der Ventilkanal 25 in die Betätigungsaufweitungen 24, wodurch er das Ventilgehäuses 23 durchstößt.

Ein Zuflusskanal 28 und ein Abflusskanal 29 münden im Wesentlichen radial in den Ventilkanal 25 und ermöglichen den Eintritt des Fluids in und Austritt des Fluids aus dem Ventilkanal 25. Der Zuflusskanal 28 lässt das Fluid in den Ventilkanal 25 strömen, während der Abflusskanal 29 das Fluid aus dem Ventilkanal 25 herausführt. Diese radialen Kanäle sind so angeordnet, dass sie eine effiziente Steuerung und Verteilung des Fluidflusses innerhalb des Türschließers 100 ermöglichen.

Die gezeigte Ventilbaugruppe 2 umfasst den Ventilstift 3, die Ventilbuchse 9 und drei Dichtelemente 22. Der Ventilstift 3 ist relativ zur Ventilbuchse 9 axial beweglich gelagert und weist einen sich konisch entlang der Längsachse A verjüngenden Regulierungsbereich 4 auf. Dieser Regulierungsbereich 4 ermöglicht eine präzise Steuerung des Fluidflusses durch die Ventilbuchse 9. Der konische Regulierungsbereich 4 verbessert die Effizienz des Ventils durch genaue Steuerung des Fluidflusses und ermöglicht eine präzise Regelung des Fluidflusses durch die Ventilbaugruppe 2.

Die Ventilbuchse 9 ist entlang der Längsachse A des Ventilkanals 25 axial festgelegt und weist eine Aufnahmekavität 10 auf, die den Ventilstift 3 teilweise aufnimmt. Der Ventilsitzbereich 11 der Ventilbuchse 9 nimmt den Regulierungsbereich 4 des Ventilstifts 3 auf und kann durch diesen verschlossen werden, um den Fluidfluss zu unterbrechen oder zu reduzieren. Der Ventilsitzbereich 11 ist zwischen einem Fluideinlass 12 und einem Fluidauslass 13 der Ventilbuchse 9 angeordnet, sodass das Fluid radial in die Ventilbuchse 9 eintreten und aus dieser austreten kann.

Zwischen dem Fluideinlass 12 und dem Fluidauslass 13 befindet sich ein Dichtelement 22, das an der Außenseite der Ventilbuchse 9 angeordnet ist. Dieses Dichtelement 22 dichtet die Ventilbuchse 9 gegen die Innenwand des Ventilkanals 25 ab und verhindert, dass das Fluid ungeregelt an der Ventilbuchse 9 vorbeifließt. Das Dichtelement 22 sorgt somit dafür, dass der Fluidfluss nur über den Fluideinlass 12 und den Fluidauslass 13 durch die Ventilbuchse 9 erfolgt.

Die gezeigte Ventilbaugruppe 2 umfasst drei Dichtelemente 22, die den Ventilkanal 25 axial in einen Anströmbereich mit dem Fluideinlass 12 der Ventilbuchse 9 und dem Zuflusskanal 28 sowie einen getrennten Abströmbereich mit dem Fluidauslass 13 der Ventilbuchse 9 und dem Abflusskanal 29 unterteilen. Diese Dichtelemente 22 verhindern, dass das Fluid in unerwünschte Bereiche eindringt und sorgen dafür, dass der Anströmbereich und der Abströmbereich nur über den Ventilsitzbereich 11 strömungsverbunden sind. Dies gewährleistet eine präzise Regelung des Fluidflusses und verhindert, dass das Fluid über die Enden des Ventilkanals 25 direkt nach ventilgehäuseaußen dringt.

Die Ventilbuchse 9 weist zwei auf ihrer radialen Außenseite angeordnete umfängliche Umströmungsnuten 16 auf, in denen das Fluid die Ventilbuchse 9 umfänglich umströmen kann. Der Fluideinlass 12 und der Fluidauslass 13 verbinden jeweils eine der Umströmungsnuten 16 mit der Aufnahmekavität 10 der Ventilbuchse 9. Dies ermöglicht einen Fluidfluss zwischen dem Zuflusskanal 28 und dem Fluideinlass 12 sowie zwischen dem Fluidauslass 13 und dem Abflusskanal 29 unabhängig von der rotatorischen Ausrichtung der Ventilbuchse 9 im Ventilkanal 25. Das Fluid kann die Ventilbuchse 9 in der jeweiligen Umströmungsnut 16 umströmen, um vom Zuflusskanal 28 zum Fluideinlass 12 sowie vom Fluidauslass 13 zum Abflusskanal 29 zu gelangen. Dadurch kann die Ventilbuchse 9 um die Längsachse A relativ zum Ventilkanal 25 gedreht werden, ohne die Wirksamkeit des Regulierventils 1 einzuschränken.

Der Ventilstift 3 und/oder die Ventilbuchse 9 weisen mindestens eine Ausnehmung 20 zur koaxialen Aufnahme eines Dichtelements 22 auf. Diese Ausnehmung 20 ermöglicht die Integration von Dichtelementen zur Vermeidung von Leckagen. Die Ausnehmung 20 kann in Form einer Radialnut gestaltet sein, und bei dem Dichtelement 22 kann es sich insbesondere um einen Dichtring handeln. Der Ventilstift 3 kann eine Ausnehmung 20 und die Ventilbuchse 9 zwei axial beabstandete Ausnehmungen 20 aufweisen.

Ein Pressring 21 dient zur axialen Festlegung der Position der Ventilbuchse 9 im Ventilkanal 25. Der Pressring 21 ermöglicht eine feste und stabile Montage der Ventilbuchse 9 und verhindert, dass diese ihre Position im Ventilkanal 25 verändert. Der Pressring 21 kann den Ventilstift 3 radial umgeben und ist axial zwischen dem Ventilstift 3 und der Ventilbuchse 9 angeordnet, sodass ein Teil des Ventilstifts 3 durch den Pressring 21 hindurch in die Ventilbuchse 9 ragt.

Beim Einbringen der Ventilbaugruppe 2 in den Ventilkanal 25 wird der Pressring 21 zusammen mit dem Ventilstift 3 und der Ventilbuchse 9 in den Ventilkanal 25 eingeführt, insbesondere bis zu einem Anschlag 31 für die Ventilbuchse 9, wie in Fig. 2 dargestellt. In axialer Richtung wird der Pressring 21 dabei durch seine Anordnung zwischen dem Ventilstift 3 und der Ventilbuchse 9 gehalten und per Presspassung in dem Ventilkanal 25 arretiert, wenn die Ventilbuchse 9 an dem Anschlag 31 anschlägt.

Zusammen mit dem Anschlag 31 fixiert der Pressring 21 die Ventilbuchse 9 dann entlang der Längsachse A. Die Ventilbuchse 9 kann jedoch weiterhin um die Längsachse A rotiert werden.

Der Ventilkanal 25, wie in Figur 3 dargestellt, verläuft entlang der Längsachse A des Ventilgehäuses 23 und weist ein weites Ende 26 sowie ein enges Ende 27 auf. Der Ventilkanal 25 verjüngt sich von dem weiten Ende 26 zu dem engen Ende 27 hin und ist so gestaltet, dass er die Ventilbaugruppe 2 aufnehmen kann. Dabei weist der Ventilkanal 25 fünf Sektionen S1 bis S5 auf, in denen der Durchmesser des Ventilkanals 25 im Wesentlichen gleichbleibt. Zwischen zwei benachbarten Sektionen S1 bis S5 verjüngt sich der Ventilkanal hingegen linear.

Das weite Ende 26 des Ventilkanals 25 weist ein Gewinde 30 auf, welches zur Aufnahme des Ventilstifts 3 dient. Durch das Gewinde 30 kann der Ventilstift 3 mit seinem Gewinde 32 in den Ventilkanal 25 eingedreht werden, um den Fluidfluss zu regulieren. Die zusammenwirkenden Gewinde 30, 32 ermöglichen eine durch Rotationsbewegung des Ventilstifts 3 verursachte axiale Bewegung des Ventilstifts 3 im Ventilkanal 25. Dies ermöglicht eine präzise Einstellung der Position des Ventilstifts 3 innerhalb des Ventilkanals 25.

Das Gewinde 30 ist ein Innengewinde, das mit einem Außengewinde 32 des Ventilstifts 3 korrespondiert.

Um den Ventilstift 3 und die gesamte Ventilbaugruppe 2 an einem herausfallen aus dem Ventilkanal 25 zu hindern, was aufgrund der sich verjüngenden Form des Ventilkanals 25 nur am weiten Ende 26 möglich wäre, wird der äußerste Gewindegang des Gewindes 30 oder das gesamte weite Ende 26 nach dem vollständigen Einbringen der Ventilbaugruppe 2 verstemmt. So wird verhindert, dass das Gewinde 32 nach ventilgehäuseaußen aus dem Ventilkanal 25 herausgedreht werden kann.

Im Bereich des engen Endes 27 des Ventilkanals 25 befindet sich zudem der Anschlag 31 für die Ventilbuchse 9. Dieser Anschlag 31 gewährleistet, dass die Ventilbuchse 9 in ihrer korrekten axialen Position bleibt und verhindert, dass sie sich in eine unerwünschte Richtung bewegt. Der Anschlag 31 ist Teil einer letzten Verjüngungsstufe zwischen den Sektionen S4 und S5 des sich stufenweise verjüngenden Ventilkanals 25.

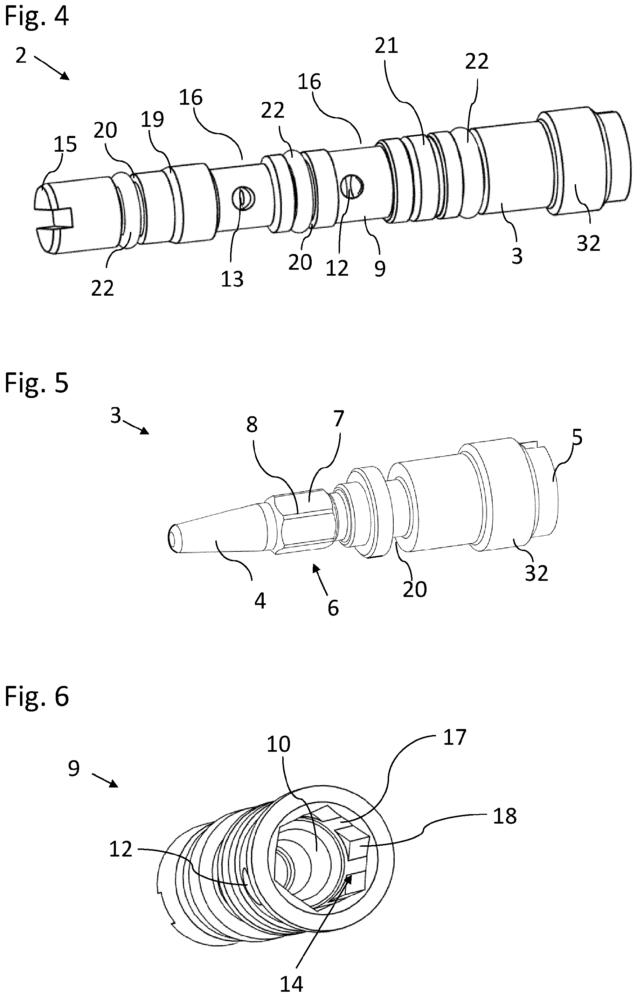

Figur 4 zeigt eine perspektivische Ansicht einer erfindungsgemäßen Ventilbaugruppe 2 als eine Montageeinheit, die den Ventilstift 3, die Ventilbuchse 9, den Pressring 21 und mehrere Dichtelemente 22 umfasst.

Die Ventilbuchse 9 weist einen Betätigungsbereich 15 auf, der eine schlitzförmige Betätigungsstelle zur Betätigung der Ventilbaugruppe 2 umfasst. Diese Betätigungsstelle ermöglicht es, die Ventilbaugruppe 2 von außen zu betätigen, ohne den Türschließer 100 demontieren zu müssen. Der Schlitz gewährleistet eine zuverlässige Kraftübertragung und Aufnahme eines Schlitzschraubendrehers, auch bei kleinen Bauformen, und verhindert eine Beschädigung der Betätigungsstelle durch die wirkenden Kräfte.

An der Außenseite der Ventilbuchse 9 sind zwei radiale Umströmungsnuten 16 angeordnet. Von diesen Umströmungsnuten 16 aus erstrecken sich der Fluideinlass 12 sowie der Fluidauslass 13 in die Aufnahmekavität 10 der Ventilbuchse 9 hinein.

Die Ventilbaugruppe 2 umfasst mindestens drei Dichtelemente 22, die in den als Radialnut ausgestalteten Ausnehmung 20 angeordnet und durch diese in ihrer Position festgelegt werden. Diese Dichtelemente 22 verhindern das Eindringen von Fluid in unerwünschte Bereiche und sorgen im montierten Zustand dafür, dass der Anströmbereich und der Abströmbereich nur über den Ventilsitzbereich 11 strömungsverbunden sind.

Der Pressring 21 ist axial zwischen dem Ventilstift 3 und der Ventilbuchse 9 angeordnet und dient zur axialen Festlegung der Position der Ventilbuchse 9 im Ventilkanal 25. Der Pressring 21 ermöglicht eine feste und stabile Montage der Ventilbuchse 9 und verhindert, dass diese ihre Position im Ventilkanal 25 verändert.

Der Pressring 21 umgibt den Ventilstift 3 radial und gewährleistet, dass der Ventilstift 3 seine Position im Ventilkanal 25 präzise verändern kann, ohne die Ventilbuchse 9 zu verschieben.

Figur 5 zeigt eine perspektivische Ansicht eines Ventilstifts 3 der Ventilbaugruppe 2 ohne das Dichtelement 22.

Der Ventilstift 3 weist mehrere funktionale Bereiche auf, die jeweils spezifische Aufgaben erfüllen.

Der Regulierungsbereich 4 des Ventilstifts 3 verjüngt sich entlang der Längsachse A konisch und ermöglicht eine präzise Steuerung des Fluidflusses durch die Ventilbuchse 9. Dabei wirkt er wie bereits beschrieben mit dem Ventilsitzbereich 11 der Ventilbuchse 9 zusammen.

Der Kopplungsbereich 6 des Ventilstifts 3 dient der form- und kraftschlüssigen Kopplung der Rotationsbewegungen zwischen dem Ventilstift 3 und der Ventilbuchse 9. Der Kopplungsbereich 6 des Ventilstifts 3 ist facettiert und weist Kontaktfacetten 7 auf, welche mit Gegenflächen 18 des Kopplungsbereichs 14 der Ventilbuchse 9 im radialen Formschluss und umfänglichen Kraftschluss anliegen. Dies ermöglicht die in beide Richtungen gewandte Übertragung einer Rotationsbewegung zwischen dem Ventilstift 3 und der Ventilbuchse 9.

Eine Betätigung der Ventilbaugruppe 2 über den Betätigungsbereich 15 der Ventilbuchse 9 kann auf diese Weise über die Kopplungsbereiche 6, 14 eine Rotation des Ventilstifts 3 bewirken, sodass dieser, bedingt durch die ineinandergreifenden Gewinde 30, 32 zur Regelung des Fluidflusses gewindeartig axial bewegt wird.

Der Kopplungsbereich 6 des Ventilstifts 3 weist zudem Radiusbereiche 8 auf, die im montierten Zustand nicht an der Ventilbuchse 9 anliegen. Diese Radiusbereiche 8 bilden den umfänglichen Übergang zwischen zwei benachbarten Kontaktfacetten 7 und begrenzen die Kontaktfacetten jeweils. Durch die Radiusbereiche 8 weisen die planen Kontaktfacetten 7 keine scharfen Kanten auf, welche bei der Montage oder wiederholten Betätigung der Ventilbaugruppe 2 zu Beschädigungen führen oder selbst abscheren könnten und so die Funktionstüchtigkeit des Regulierventils 1 beeinträchtigen könnten. Die Radiusbereiche 8 können bei der Herstellung der Kontaktfacetten 7 entstehen, in dem beispielsweise ein Radius vorgedreht wird und anschließend mittels eines z.B. Frässchrittes die Kontaktfacette ausgebildet wird. Alternativ ist vorstellbar, dass die Kontaktfacetten 7 mittels eines Frässchrittes ausgebildet werden und anschließend eine daraus resultierende Kante zwischen den jeweiligen Kontaktfacetten 7 abgedreht oder abgefast wird.

Der Ventilstift 3 weist außerdem eine radiale Ausnehmung 20 zur koaxialen Aufnahme eines Dichtelements 22 auf. Diese Ausnehmung 20 ermöglicht die Integration von Dichtelementen zur Vermeidung von Leckagen. Die Ausnehmung 20 ist im dargestellten Ausführungsbeispiel in Form einer Radialnut gestaltet, um das Dichtelement 22 sicher zu halten und eine effektive Abdichtung zu gewährleisten.

Axial zwischen dem Regulierungsbereich 4 und der Ausnehmung 20 ist der Kopplungsbereich 6 angeordnet.

Am diametral zum Regulierungsbereich 4 liegenden Ende des Ventilstifts 3 befindet sich der Betätigungsbereich 5, der eine schlitzförmige Betätigungsstelle zur Betätigung des Ventilstifts 3 umfasst. Diese Betätigungsstelle ermöglicht es, den Ventilstift 3 von ventilgehäuseaußen zu betätigen.

Zu erkennen ist zudem das Gewinde 32 des Ventilstifts 3, das zur Aufnahme im Gewinde 30 des Ventilkanals 25 dient. Durch das Gewinde 32 kann der Ventilstift 3 in den Ventilkanal 25 eingedreht werden, um den Fluidfluss zu regulieren. Das Gewinde 32 ermöglicht eine durch Rotationsbewegung verursachte axiale Bewegung des Ventilstifts 3 im Ventilkanal 25. Das Gewinde 32 ist ein Außengewinde, das mit einem Innengewinde des Ventilkanals 25 korrespondiert.

Dabei liegt das Gewinde 32 relativ zum Kopplungsbereich 6 dem Regulierungsbereich 4 entlang der Längsachse A gegenüber.

Figur 6 zeigt eine perspektivische Ansicht einer Ventilbuchse 9 der Ventilbaugruppe 2 ohne die Dichtelemente 22.

Die Ventilbuchse 9 weist mehrere funktionale Bereiche auf, die jeweils spezifische Aufgaben erfüllen.

Im Mittelpunkt steht die Aufnahmekavität 10, die den Ventilstift 3 teilweise aufnimmt. Diese Aufnahmekavität 10 ermöglicht eine präzise Steuerung des Fluidflusses durch den Ventilstift 3, indem sie dessen konischen Regulierungsbereich 4 aufnimmt und je nach Position des Ventilstifts 3 den Fluidfluss reguliert.

Der Ventilsitzbereich 11 bildet dabei ebenso wie der Kopplungsbereich 14 einen Teil der Aufnahmekavität 10.

Der Ventilsitzbereich 11 nimmt den Regulierungsbereich 4 des Ventilstifts 3 auf und kann durch diesen verschlossen werden. Der Ventilsitzbereich 11 kann vollständig durch den Regulierungsbereich 4 des Ventilstifts 3 verschlossen werden, um den Fluidfluss zu unterbrechen, oder nur teilweise verschlossen werden, sodass der für einen Durchfluss des Fluids freie Querschnitt reduziert wird und der Fluidfluss verringert wird.

Die Ventilbuchse 9 weist zudem einen Kopplungsbereich 14 auf, der zur formschlüssigen Kopplung der Rotationsbewegungen zwischen dem Ventilstift 3 und der Ventilbuchse 9 dient. Der Kopplungsbereich 14 der Ventilbuchse 9 ist so gestaltet, dass er einen radialen Formschluss mit dem Kopplungsbereich 6 des Ventilstifts 3 ermöglicht. Dies gewährleistet eine synchronisierte Bewegung, insbesondere eine synchronisierte Rotationsbewegung, des Ventilstifts 3 und der Ventilbuchse 9.

Der Kopplungsbereich 14 der Ventilbuchse 9 weist nach radial innen gerichtete Gegenflächen 18 auf, die mit den Kontaktfacetten 7 des Kopplungsbereichs 6 des Ventilstifts 3 im radialen Formschluss anliegen. Dies ermöglicht die Übertragung einer Rotationsbewegung zwischen dem Ventilstift 3 und der Ventilbuchse 9. Bei einer Betätigung der Ventilbaugruppe 2 über den Betätigungsbereich 15 der Ventilbuchse 9 wird der Ventilstift 3 so ebenfalls in Rotation versetzt, sodass dieser zur Regelung des Fluidflusses axial bewegt wird.

Ein Teil der als Seiten eines Hexagons angeordneten Gegenflächen 18 wird jeweils von einer Fertigungsfläche 17 gebildet. Diese Fertigungsflächen 17 sind Überreste einer bei der Fertigung der Ventilbuchse 9 in den Ventilbuchsen-Rohling eingebrachten Axialbohrung, von der aus ausgehend die übrigen Teile der Gegenflächen 18 als tangentiale Flächen zur Axialbohrung gefräst werden.

### BEZUGSZEICHENLISTE

- 1: Regulierventil
- 2: Ventilbaugruppe
- 3: Ventilstift
- 4: Regulierungsbereich
- 5: Betätigungsbereich
- 6: Kopplungsbereich
- 7: Kontaktfacette
- 8: Radiusbereich
- 9: Ventilbuchse
- 10: Aufnahmekavität
- 11: Ventilsitzbereich
- 12: Fluideinlass
- 13: Fluidauslass
- 14: Kopplungsbereich
- 15: Betätigungsbereich
- 16: Umströmungsnut
- 17: Fertigungsfläche
- 18: Gegenfläche
- 19: Gegenanschlag
- 20: Ausnehmung
- 21: Pressring
- 22: Dichtelement
- 23: Ventilgehäuse
- 24: Betätigungsaufweitung
- 25: Ventilkanal
- 26: weites Ende
- 27: enges Ende
- 28: Zuflusskanal
- 29: Abflusskanal
- 30: Gewinde
- 31: Anschlag
- 32: Gewinde
- 100: Türschließer
- A: Längsachse
- S1-S5: Sektion

## Patentansprüche

1. Regulierventil (1) für einen Türschließer (100) zum Öffnen und/oder Schließen einer Tür mit einem Ventilgehäuse (23), einem das Ventilgehäuse (23) durchstoßenden, sich verjüngenden Ventilkanal (25) mit einem weiten Ende (26) und einem engen Ende (27), einem im Wesentlichen radial in den Ventilkanal (25) mündenden Zuflusskanal (28), einem im Wesentlichen radial in den Ventilkanal (25) mündenden Abflusskanal (29) und einer im Ventilkanal (25) angeordneten und eine sich im Wesentlichen axial verjüngende Form aufweisenden Ventilbaugruppe (2) mit einem Ventilstift (3) und einer Ventilbuchse (9), welche eine den Ventilstift (3) teilweise aufnehmende Aufnahmekavität (10) aufweist.

2. Regulierventil (1) nach Anspruch 1, **dadurch gekennzeichnet, dass** der Ventilkanal (25) am engen Ende (27) in eine nach ventilgehäuseaußen offene Betätigungsaufweitung (24) des Ventilgehäuses (23) mündet.

3. Regulierventil (1) nach einem der Ansprüche 1 oder 2, **dadurch gekennzeichnet, dass** der Ventilstift (3) in dem Ventilgehäuse (23) relativ zur Ventilbuchse (9) axial beweglich gelagert ist.

4. Regulierventil (1) nach einem der vorhergehenden Ansprüche, **dadurch gekennzeichnet, dass** der Ventilstift (3) einen sich konisch entlang der Längsachse (A) verjüngenden Regulierungsbereich (4) aufweist.

5. Regulierventil (1) nach einem der vorhergehenden Ansprüche, **dadurch gekennzeichnet, dass** die Ventilbuchse (9) entlang der Längsachse (A) des Ventilkanals (25) axial festgelegt ist.

6. Regulierventil (1) nach Anspruch 5, **dadurch gekennzeichnet, dass** die Ventilbaugruppe (2) einen Pressring (21) zur axialen Festlegung der Position der Ventilbuchse (9) im Ventilkanal (25) aufweist.

7. Regulierventil (1) nach einem der vorhergehenden Ansprüche, **dadurch gekennzeichnet, dass** die Ventilbuchse (9) einen radial verlaufenden Fluideinlass (12) und einen radial verlaufenden Fluidauslass (13) aufweist.

8. Regulierventil (1) nach Anspruch 7, **dadurch gekennzeichnet, dass** die Ventilbaugruppe (2) mindestens drei Dichtelemente (22) aufweist, die den Ventilkanal (25) axial in einen Anströmbereich mit dem Fluideinlass (12) der Ventilbuchse (9) und dem Zuflusskanal (28) sowie einen getrennten Abströmbereich mit dem Fluidauslass (13) der Ventilbuchse (9) und dem Abflusskanal (29) unterteilen.

9. Regulierventil (1) nach einem der vorhergehenden Ansprüche, **dadurch gekennzeichnet, dass** der Ventilstift (3) und/oder die Ventilbuchse (9) mindestens eine Ausnehmung (20) zur koaxialen Aufnahme eines Dichtelements (22) aufweist.

10. Regulierventil (1) nach einem der Ansprüche 4 bis 9, **dadurch gekennzeichnet, dass** die Ventilbuchse (9) einen den Regulierungsbereich (4) des Ventilstifts (3) aufnehmenden Ventilsitzbereich (11) aufweist, welcher durch den Regulierungsbereich (4) verschließbar ist.

11. Regulierventil (1) nach einem der vorhergehenden Ansprüche, **dadurch gekennzeichnet, dass** der Ventilstift (3) und die Ventilbuchse (9) zusammenwirkende Kopplungsbereiche (6, 14) zur formschlüssigen Kopplung der Rotationsbewegungen des Ventilstifts (3) und der Ventilbuchse (9) aufweisen.

12. Regulierventil (1) nach Anspruch 11, **dadurch gekennzeichnet, dass** der Kopplungsbereich (6) des Ventilstifts (3) facettiert ist und Kontaktfacetten (7) aufweist, welche mit Gegenflächen (18) des Kopplungsbereichs (14) der Ventilbuchse (9) im radialen Formschluss anliegen.

13. Regulierventil (1) nach einem der vorhergehenden Ansprüche, **dadurch gekennzeichnet, dass** der Ventilkanal (25), insbesondere einzig, am weiten Ende (26) ein Gewinde (30) aufweist.

14. Regulierventil (1) nach Anspruch 13, **dadurch gekennzeichnet, dass** der Ventilkanal (25) im Bereich eines engeren Endes (27) einen Anschlag (31) für die Ventilbuchse (9) aufweist.

15. Türschließer (100) zum Öffnen und/oder Schließen einer Tür mit einem Regulierventil (1) nach einem der vorhergehenden Ansprüche, wobei das Ventilgehäuse insbesondere ein Teil des Gehäuses des Türschließers (100) ist.

16. Verfahren zur Herstellung eines Regulierventils (1), insbesondere nach einem der Ansprüche 1 bis 14, insbesondere eines Türschließers nach Anspruch 15, umfassend die Schritte
• Einbringen der Ventilbaugruppe (2) mit dem in der Ventilbuchse (9) angeordneten Ventilstift (3), insbesondere zusammen mit einem den Ventilstift (3) radial umgebenden Pressring (21), als eine Einheit von dem weiten Ende (26) des Ventilkanals (25) aus in den Ventilkanal (25);
• Eindrehen des Gewindes (32) des Ventilstifts (3) in ein Gewinde (30) des Ventilkanals (25), insbesondere bis ein Regulierungsbereich (4) des Ventilstifts (3) an einem Ventilsitzbereich (11) der Ventilbuchse (9) anliegt oder die Ventilbuchse (9) an einem Anschlag (31) des Ventilkanals (25) anliegt;
• Sichern der Ventilbaugruppe (2) gegen ein Austreten, insbesondere des Ventilstifts (3), aus dem Ventilkanal (25).

17. Verfahren nach Anspruch 16, **dadurch gekennzeichnet, dass** der Schritt des Sicherns der Ventilbaugruppe (2) umfasst:
• ein Verstemmen des Ventilgehäuses (23), so dass eine Verformung des weiten Endes (26) eintritt, und/oder
• ein Verstemmen des äußersten Gewindeganges des Gewindes (30) des Ventilkanals (25), und/oder
• ein Anbringen eines Sicherungsringes, und/oder
• ein Anbringen einer Sicherungsplatte.
